# EUROPEAN PATENT APPLICATION

(11) **EP 1 626 357 A2**
(43) Date of publication of application: **15.02.2006**
(21) Application number: 05254952.4
(22) Date of filing: 09.08.2005
(51) Int. Cl.: G06F 17/30

(54) **Extension of xquery in a high performance xml/xquery database**

(30) Priority: 10.08.2004 US 914877; 10.08.2004 US 914903; 10.08.2004 US 915529
(71) Applicant: Palo Alto Research Center Incorporated, Palo Alto, California 94304 (US)
(72) Inventor: Cheslow, Robert D., Los Angeles, CA 90066 (US)
(74) Representative: Skone James, Robert Edmund

(57) **Abstract**

A system for extension of XQuery in a binary object XML repository includes XQuery interpreter (110) capabilities for implementing the XQuery language in the binary object XML repository. A function dispatcher module (120) implements an XQuery call mechanism, with the function being defined by the name of the function, the number of arguments taken by the function, and the datatypes of the arguments. A plug-in function library manager (130) implements the client side of the binary object XML repository plug-in function application program interface, and a dynamically-linked plug-in function library (140,150) module for implements the server side of the binary object XML repository plug-in function application program interface.

## Description

This invention relates generally to a computer software system and associated method for providing additional functionality for querying and formatting XML, and more particularly to implementation of an API that permits plug-in libraries of functions in other languages within XQuery, full-text search functionality integrated into the XQuery language, and storage and retrieval of data in XML documents.

There are various strategies for storing and managing XML documents. In XML repositories based on relational database technology, the XML is stored using a method known as "shredding". In this approach, the markup is broken up and stored in fields of database tables, and XML queries are translated into a relational query language (e.g. SQL, Structured Query Language) that retrieves the values from the database using relational operations, and generates the markup output. Overhead for storage is high, and performance for regeneration of the XML (or "round-tripping" of entire XML documents) is typically low. Other database managers designed specifically for XML utilize indexing schemes to process the markup representation of XML more efficiently.

Applications for querying XML databases (such as XQuery, a general-purpose XML query language) often require the ability to perform full-text search on the stored data. The search functionality must be integrated within the query language to allow for control over the structures to be searched, and to make search results available to other XQuery constructs. The XQuery specification contains a set of set forth in the XQuery specification functions that can be called from within query expressions, and also allows for user-defined functions that are written in XQuery.

An example of one approach to querying XML documents is presented in U.S. Pat. No. 6,654,734 to Mani et al. ("System and Method for Query Processing and Optimization for XML Repositories"). The query system of Mani et al. views the data in XML documents as a graph that allows queries on content, structure, inter-document links, and intra-document links. The query language is based on tree pattern match semantics using XML semantics, with features that allow the query system to compute a document type definition for the query language and use it to validate the user query formulation. Query optimization is accomplished using schema-based optimization and index-based optimization. The structure pattern is then converted to a string for storage purposes.

Another approach is described in U.S. Pat. Application Publication No. 2002/0169788 to Lee et al. ("System and Method for Automatic Loading of an XML Document Defined by a Document-Type Definition into a Relational Database Including the Generation of a Relational Schema Therefor"). Under the system of Lee et al., a relational schema is created out of a DTD, and XML data is loaded into the generated relational schema that adheres to the DTD. Starting with a DTD for an XML document containing data, all of the information in the DTD is captured into metadata tables, and then the metadata tables are queried to generate the relational schema. The data contained in the XML document can then be loaded into the generated relational schema.

While the XQuery specification provides certain functionality within set forth in the XQuery specification functions, and other functionality can be added via user-defined functions written in XQuery, some functionality required for applications using XQuery can not be efficiently implemented within XQuery, and there is no mechanism for linking to externally implemented functions. It would be desirable to provide a mechanism to dynamically link to externally implemented functions in "plug-in" libraries to enhance functionality.

In accordance with a first aspect of the present invention, a system for extension of XQuery in a binary object XML repository, full text search integration, and a storage and retrieval repository comprises:
at least one XQuery interpreter module for implementing the XQuery language in the binary object XML repository;
at least one function dispatcher module for implementing an XQuery function call mechanism, wherein a function is defined by the name of said function, the number of arguments taken by said function, and the datatypes of said arguments;
at least one plug-in function library manager for implementing the client side of the binary object XML repository plug-in function application program interface; and
at least one dynamically-linked plug-in function library module for implementing the server side of the binary object XML repository plug-in function application program interface.

In accordance with a second aspect of the present invention, a method for extension of XQuery for a binary object XML repository, full text search integration, and storage and retrieval of information, having an XQuery interpreter module, a function dispatcher module, a plug-in function library manager, at least one plug-in function library module, a search function implementation module, a search function postings resolution manager module, a postings module, an import manager module, an indexer module, a lexicon module, and a sequence module comprises:
implementing the XQuery language in the binary object XML repository;
preparing to execute a function wherein a function is defined by the name of said function, the number of arguments taken by said function, and the datatypes of said arguments;
determining whether said function is a built-in or user-defined XQuery function, wherein said built-in function is specified as part of the XQuery language;
executing the computer code for said function if said function is a built-in or user-defined XQuery function;
determining whether said function has been declared in a plug-in library if said function is not a built-in or user-defined XQuery function;
dispatching said function to said declared library and executing the computer code for said function if said function has been declared in a plug-in library;
determining whether at least one plug-in library module has been added or changed if said function has not been declared in a plug-in library;
loading said new or changed library modules if said at least one plug-in library module has been added or changed; and
declaring an undefined function error if said at least one plug-in library module has not been added or changed.

FIG. 1 is a schematic diagram of an example embodiment of the extension of XQuery in an XML/XQuery database system;
FIG. 2 is a flowchart demonstrating one embodiment of the method for extension of XQuery in an XML/XQuery database system;
FIG. 3 is a schematic diagram of an example embodiment of the full-text search integration in XML database system;
FIG. 4 is a flowchart demonstrating one embodiment of the full-text XML search integration method;
FIG. 5 is a schematic diagram of an example embodiment of the high performance XML storage system;
FIG. 6 is a schematic diagram of an example embodiment of the high performance XML retrieval system;
FIG. 7 is a flowchart demonstrating XML data storage according to one embodiment of the XML storage and retrieval technology; and
FIG. 8 is a flowchart demonstrating XML data retrieval according to one embodiment of the XML storage and retrieval technology.

The system and method described herein are based on the extension of XQuery through the use of externally implemented functions in "plug-in" libraries. Libraries of functions are implemented in an executable module that can be linked to a system for management of XML data. For the purposes herein, the system for the management of XML data will be described as BOXR (Binary Object XML Repository), but it is noted that other such systems may be utilized. The libraries of functions can be linked to the BOXR process using the operating system dynamic linking mechanism. BOXR loads and interrogates the module through an application program interface (API) to determine the names and calling conventions for each function in the library. These functions are then made available within XQuery. The API also gives plug-in library functions access to BOXR internal functions for accessing XML datatypes, executing other XQuery functions, etc.

XQuery, a language specification from the W3C standards committee (refer to http://www.w3.org/TR/xquery/), allows querying of XML documents. XQuery also specifies functions which process or filter XML data. A set of built-in functions, those set forth in the XQuery specification, is specified as part of the language, and other functions (user-defined functions) can be defined by the query-writer as part of a query.

In the following description numerous specific details are set forth in order to provide a thorough understanding of the system and method. It would be apparent, however, to one skilled in the art to practice the system and method without such specific details. In other instances, specific implementation details have not been shown in detail in order not to unnecessarily obscure the present invention.

Various computing environments may incorporate capabilities for providing extension of XQuery in XML databases. The following discussion is intended to provide a brief, general description of suitable computing environments in which the method and system may be implemented. Although not required, the method and system will be described in the general context of computer-executable instructions, such as program modules, being executed by a single computer. Generally, program modules include routines, programs, objects, components, data structures, etc., that perform particular tasks or implement particular abstract data types. Moreover, those skilled in the art will appreciate that the method and system may be practiced with other computer system configurations, including hand-held devices, multi-processor systems, microprocessor-based or programmable consumer electronics, networked PCs, minicomputers, mainframe computers, and the like.

The method and system may also be practiced in distributed computing environments where tasks are performed by remote processing devices that are linked through a communications network. In a distributed computing environment, program modules may be located in both local and remote memory storage devices.

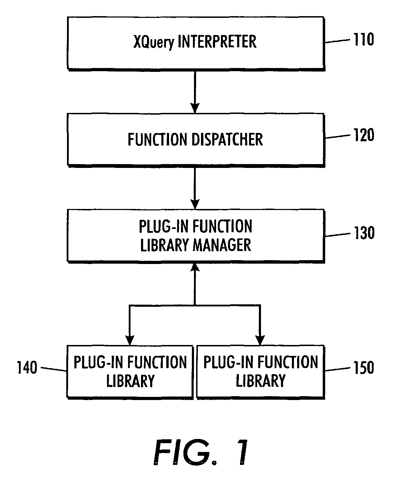

Referring to Figure 1, the schematic diagram illustrates an embodiment of the system for extension of XQuery in an XML/XQuery database. BOXR XQuery interpreter module 110 implements the XQuery language, accepting queries and returning results. The function dispatcher 120 operates as a code module that implements the XQuery function calling mechanism. When the XQuery interpreter encounters a function call, the interpreter invokes the function dispatcher. The function dispatcher evaluates the arguments, and attempts to locate the code associated with the body of the function. If there is no built-in definition of the function in question, the function dispatcher invokes the plug-in function library manager 130 to attempt to load the function code from a plug-in library. Thus the query interpreter 110 invokes the function dispatcher 120, which in turn invokes the plug-in function library manager 130 and sends the argument values to it. The plug-in function library manager 130 interrogates the dynamically-linked libraries (140, 150, etc) that have been installed with the system using BOXR Plug-In Function API (Application Program Interface) to find a library that implements the function in question. If this is successful, the code corresponding to the function in question is executed within the plug-in library, which returns the results to the plug-in function library manager 130, which in turn returns the results to the function dispatcher 120, and the dispatcher returns the results of the function call back to 110.

As mentioned above, function dispatcher module 120 implements an XQuery function call mechanism. As an example of such a call, the *substitute* function may take three arguments: substitute (string, old new). The first argument ("string") specifies the string which is to be processed, the second argument ("old") is the character or substring to find and replace, and the third argument ("new") is the character or string to insert. Together the name of the function, "substitute", the arity of the function (the number of arguments it takes), which is 3, and the datatypes of the argument (all strings in this example) define the specific function code that is required to execute. The function dispatcher looks up this information in a built-in table to see if this particular function is a built-in function, or a user-defined function. When that fails, the plug-in mechanism described above attempts to locate and execute the code in a plug-in library.

As mentioned above, plug-in function library manager 130 implements the client side of BOXR plug-in API. Library manager 130 finds, interrogates, and loads plug-in function libraries. The BOXR engine implements an API that allows developers to write libraries of functions for XQuery. These "plug-in" libraries report to BOXR information regarding the functions that are implemented - the function names and arity and parameter datatypes for each function. The functions are registered by a dynamic linking mechanism, and BOXR makes these functions available for use. Thus, to add additional functions to BOXR, a library module can simply be placed in a specified location, and BOXR will automatically register the functions for use. Function registration is accomplished at startup time, but whenever a function that is currently undefined is encountered, BOXR will re-scan the library directory to see if additional libraries have been added that may contain the new function. In this way, new functions can be added even as the BOXR engine is running.

Plug-in function library modules 140 and 150 are shared, dynamically-linked libraries implementing the server side of the BOXR plug-in API and functionality for library functions. The standard string functions defined in the XQuery specification are implemented as a plug-in library, to improve modularity of the engine. Other libraries that are included with the standard BOXR distribution include functions to send and receive email, format text (e.g. finding email addresses and formatting them as mailto: links for HTML), and generate highlighted excerpts for the results of full-text search queries as described in Attorney Docket Number 20040886-US-NP, U.S. Application Serial No. XX/XXX,XXX, filed August 10, 2004, titled "Full-Text Search Integration in XML Database", incorporated by reference hereinabove.

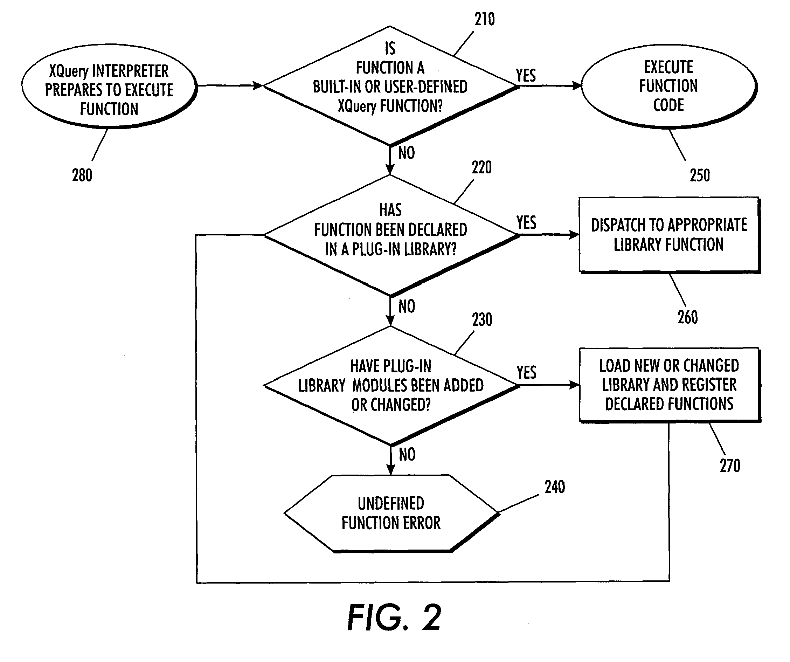

Turning now to Figure 2, the flowchart illustrates one embodiment of the method for extension of XQuery in an XML/XQuery database. At 280 the XQuery interpreter prepares to execute a function. As the interpreter executes a query, each statement in the query is executed in turn. If the next statement is a function call, the interpreter prepares to execute the function call by invoking the function dispatcher. A determination is made at 210 as to whether the function is a built-in or user-defined XQuery function. If the function is a built-in or user defined XQuery function, the function code is executed at 250. If the function is not a built-in or user defined XQuery function, a determination is made at 220 as to whether the function has been declared in a plug-in library.

If the function has been declared in a plug-in library, it is dispatched to the appropriate library function at 260 and the function code is executed at 250. If the function has not been declared in a plug-in library, an assessment is made as to whether plug-in library modules have been added or changed at 230. If the plug-in library modules have been added or changed, the software loads the new or changed library and modules and registers declared functions at 270 and returns to 220 to determine whether the function has been declared in a plug-in library. If plug-in library modules have not been added or changed, then at 240 and undefined function error is declared.

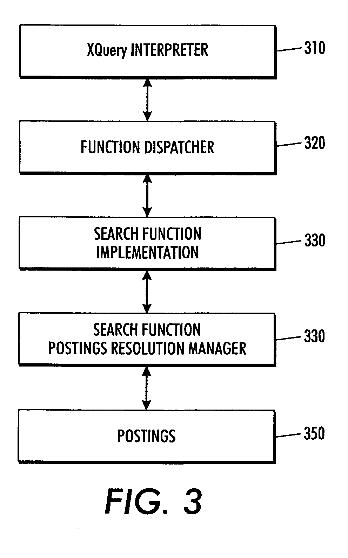

An example of one of the functions that may be integrated as described above is search functionality, which is integrated via the system function dispatcher. This is illustrated in Figure 3, which is a system diagram of one embodiment of the full-text search for XML databases is shown. At 310 the BOXR XQuery interpreter Module implements the XQuery language, accepting queries and returning results. The function dispatcher acts as a code module that implements the XQuery function calling mechanism. When the XQuery interpreter encounters a function call, the interpreter invokes the function dispatcher. The function dispatcher evaluates the arguments, locates the code associated with the body of the function, invokes the implementation of the function and passes the argument values to it. Thus the query interpreter 310 invokes the function dispatcher 320, which in turn invokes the function implementation 330 and sends the argument values to it; the implementation module330 executes and returns the results to the dispatcher, and the dispatcher returns the results of the function call back to 310. Function dispatcher 320 implements the XQuery function call mechanism. For example, the search function may take two arguments. The first argument specifies the node set (data) which is to be searched, and the second argument is the search expression to evaluate. A call to the search function could take the form:
search($data, "{'foo' and 'bar'}").

In this example, "$data" is a variable bound to a node set (a node set is a set of XML "nodes"; with a "node" being essentially an XML element). The function dispatcher 320 retrieves the value - the node set - of the variable $data, locates the code for the search function, passes the argument values, and invokes the function code. Essentially the downward arrows in the diagram represent code invocation and passing of argument data, and the upward arrows represent the return of result data.

Search function implementation module 330 implements the built-in search function and interprets the full-text Search query syntax. Standard XQuery provides a rudimentary string search capability in the built-in function *contains (data, string)*. The function is typically used as a predicate to filter XML data elements. BOXR incorporates full-text search functionality by adding a new built-in function, *search (data, search-expression)*. The search function implementation module 330 contains the code that implements the search function. This code interprets the search expression language, locates the data that matches the search expression, and returns the resulting node set. To do this, the search function implementation invokes the postings resolution manager 340 and sends to it the values of the arguments.

The postings resolution manager identifies the XML nodes that contain the search terms, using the postings file. These postings are returned to the search function implementation, which then applies the logic of the search expression to determine which nodes satisfy the search expression. Search Function Postings Resolution Manager 340 computes the candidate elements for search query resolution. Several other mechanisms have been added to BOXR to enhance its usability in full-text search applications. While the standard *contains* function returns a Boolean value, the BOXR *search* function returns a score which reflects the strength of the match found (essentially the number of matches between the search expression and the specified data element(s)). This score can be used in the XQuery order by statement to sort the results by relevance. Postings module 350 interacts with the postings file: Given a token, the postings module returns all XML nodes that contain the token. (Note that since XML elements are nested hierarchically, a token may be contained within several elements. For example in the data:
<root><a><b>foo</b></a></root> the token "foo" is contained in the scope of elements "root", "a", and "b". Which element is recorded in the postings is determined either by automatic (heuristic) means or explicitly by the database designer).

In addition, the *search* function stores the location of each match, so that other functions can quickly identify the words that matched the search expression. For example, there is a function that will tag matching words in the query results, and a function that will extract excerpts surrounding these words.

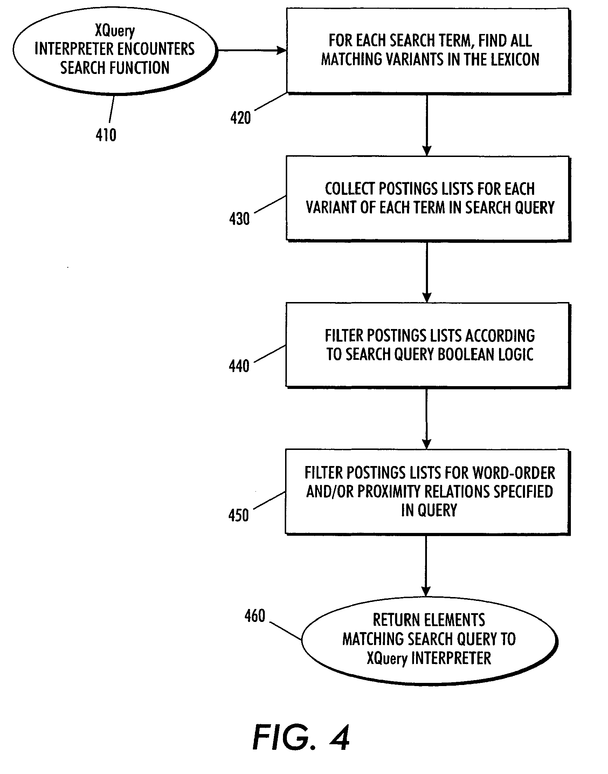

Turning now to Figure 4 the flowchart illustrates the method of operation for the full-text search integration system. At 410 the XQuery interpreter module encounters the *search* function and initiates the full-text search. For each search term, all matching variants in the lexicon are found at 420, using case-insensitive, spelling correction, and/or stemming routines. Rather than simply finding occurrences of a literal string, the search expression given to the *search* function is written in a full-featured pattern-matching language. This language can specify nested Boolean operations (such as and, or, not), proximity and order relations (for example, find a token onlywhen it precedes another token by less than four words), and flexible token matching (e.g. case-insensitive matching, approximate matching, and wildcard matching). Postings lists are collected for each variant of each term in the search query at 430.

The postings lists contain sequence offsets to elements containing terms in the search query. For the purposes herein, a sequence offset is the location in the sequence file for a particular token. For example, the XML fragment <root id='3'> would be represented by three tokens, "root", "id", and "3". These three tokens would be stored in the lexicon, which would assign Token IDs to the tokens, for example 1, 2, and 3 (Actually the Token I Ds contain the token type information in high-order bits). These three Token IDs would be added to the sequence. The sequence offset is the offset of each Token ID in the sequence, so the sequence offset for the token "root" in this sequence would be 0, and the sequence offset for "id" would be 1, etc.

The postings lists are filtered at 440 according to the search query Boolean logic using fast ordered list union/intersect routines. For example, if the search expression specified all nodes that contained both the term "foo" and the term "bar", this would be written "{'foo' and 'bar'}". First the postings for all elements containing the term "foo" would be retrieved. These postings are the sequence offsets for the elements whose scope contains the token "foo". For the purposes of example, the postings for "foo" may be the set (100, 200, 300, 400) - meaning that at these offsets in the sequence are the elements that contain the token "foo". Then the postings for "bar" would be retrieved - for the purposes of example, this set may be (300, 400, 500 600). Since the query expression requires that both "foo" and "bar" occur in matching nodes, the postings resolution manager computes the intersection of these postings lists, which in the example would be (300, 400). (If the expression specified a boolean OR instead of AND, the union of the two sets would be computed). In BOXR, the intersections and unions can be computed efficiently because the postings, by virtue of the way they are stored, are guaranteed to be in ascending order (i.e. ascending sequence offsets for each token).

At 450 the postings lists are filtered for word-order and/or proximity relations specified in the query, if these are specified. Continuing with the same example, posit that instead of a simple "and" in the search expression ("{'foo' and 'bar'}") that the search expression specified that "bar" must occur within four words following "foo" - this would be written "{'foo' {+4} 'bar'}". In this case, once the postings for elements containing both "foo" and "bar" had been computed, another pass would be required to identify only those elements containing both tokens with the specified word-order and proximity relationship. This pass can be accomplished efficiently because it is the integer Token IDs that are being compared rather than the token strings themselves, and integer comparisons are much faster to execute than string comparisons. Those elements matching the search query are returned to the XQuery interpreter at 460. Once the nodes that satisfy the search expression are returned to the interpreter, the results are integrated into the query processing in the same way that any function call result is processed in XQuery. The results can be regenerated back into XML, or used in further query processing. A typical use for the search function is as a "predicate" function, best explained by an example:
for $x in document("mydoc.xml")/ROOT
where $x[search(A, "{'foo' and 'bar'}")]
order by score($x) descending
return $x

This example can be described as follows: Assign the variable "$x" to all "ROOT" nodes in the XML document "mydoc.xml" where the "A" element directly under the root node contains the tokens "foo" and "bar", then order these nodes by the score of each in descending order (where the score is the total number of times either of these tokens occurred in the result node), and finally return these nodes.

Since BOXR maintains postings which map each token to its occurrences within the XML data, complex full-text query expressions can be resolved efficiently. The fact that the *search* function is implemented as a built-in XQuery function enables XQuery developers to specify which portions of the XML structure are to be searched, using syntax which is already present in the XQuery language.

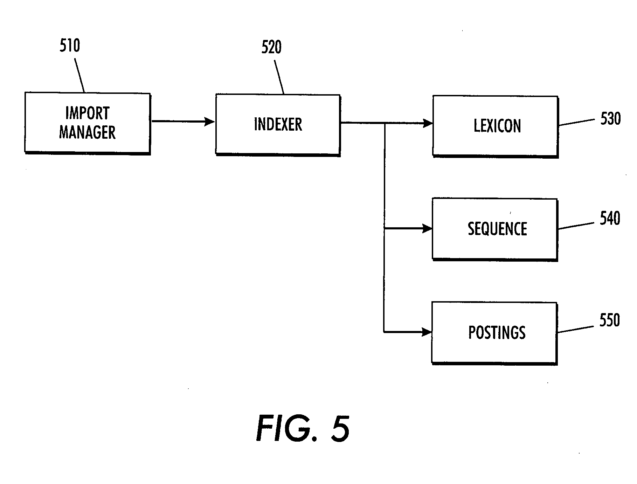

The functionality of the postings and lexicon modules and the associated storage and retrieval technology, discussed briefly with respect to items 420 and 430 hereinabove, is described in more detail in Figures 5-8. Turning now to Figure 5, the storage portion of the storage/retrieval technology is illustrated. Import manager 510 converts various file formats to XML. The conversions are performed by "filters", which are independent modules (shared dynamically linked libraries) that are written to an API specification for BOXR filters. Thus they are "plug-in" modules - they can be added to the system without changing the core engine. BOXR filters have been written for MS Word®, Excel®, PowerPoint®, PDF, HTML, Outlook® and Outlook express EMail, plain text files, and some specially delimited text files. The filters read these file formats, and convert the content to XML, which is returned to BOXR import routines. The filters determine the schema of the converted XML, which may contain structure (e.g. paragraphs for Word, slides/bullets for PowerPoint, etc.) and including metadata associated with each file (e.g. original file name, file size, author, "To" and "From" for mailnotes, etc.).

Indexer 520 streams through the XML documents and stores data. Indexer 520 operates as a tokenizer that breaks the data into pieces corresponding to the XML syntax. Each piece (or "token") is stored in lexicon 530, which assigns a unique integer value to the token that also encodes the associated XML grammar element. For example, "<root id='3'>" would be stored in lexicon 530 as three tokens: "root" as an element name, "id" as an attribute name, and "3" as an attribute value. As the tokens are processed and stored in lexicon 530, the integer values assigned to each one are stored in sequence file 540. Postings module 550 maps the token identifier numbers to the positions of certain data elements in which they occur in the sequence. The original XML markup can then be regenerated by using this sequence of integer values and looking up the associated string and type information for each value from the lexicon.

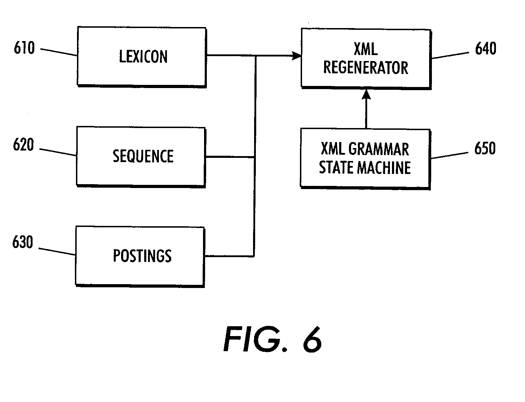

Referring now to Figure 6, the regeneration portion of the storage/retrieval technology is illustrated. Within lexicon 610 reside the data tokens with their assigned unique integer values and encoded associated XML grammar element. Sequence file 620 includes the integer values assigned to each token. The primary index structures used to accelerate query evaluation are "postings" at 630. Postings files take the list of tokens that occur in a given XML data element and invert the information to map a given token to all data elements in which it occurs. This technique allows an XQuery engine to quickly focus the query interpreter on sections of the XML data that can satisfy a particular query expression. (For the purposes herein, XQuery refers to the specification for a general-purpose XML query language created and endorsed by the W3C standards organization (refer to http://www.w3.org/TR/xquery/). It borrows from previous XML query languages such as XPath, XSL, and Quilt. Developers implement interpreters for the XQuery language using different methods and programming languages.) In addition, postings enable powerful full-text search queries to be integrated into XQuery.

XML regenerator 640 retrieves tokens and formats XML for a given scope in the sequence. Each element in XML begins with a "start tag" and ends with an "end tag" (or "closing tag"). The "scope" of an element is that which is contained between the start and end tags (start tags are enclosed in angle brackets, and end tags are in angle brackets with a forward slash preceding the element name). For example:
<root><data>this is some data</data></root>

In this XML fragment, the scope of the "data" element is the text "this is some data". The scope of the "root" element is <data>this is some data</data>. For each Token ID, the token string is retrieved from the lexicon. The lexicon is in the form of a ternary trie structure that enables efficient storage and retrieval of strings. XML grammar state machine 650 uses token type information to compute syntax for the regenerated XML. Token types include, for example, "Element name in start tag", "Element name in end tag", "Attribute Name", "Attribute Value", and CDATA (text), etc.

XML grammar state machine 650 formats the retrieved token strings into valid XML by keeping track of the token types, which include "Element name in start tag", "Element name in end tag", "Attribute Name", "Attribute Value", and CDATA (text), as examples. Referencing the previously mentioned example, "<root id='3'>, there are three token IDs in the sequence that represent this tag: One for "root" with a token type of "Element name in a start tag", one for "id" with the type "Attribute name", and one for '3" with the type "Attribute value". The grammar state machine adds a left angle bracket before the element name, a space before the attribute name, an equals sign after the attribute name, quotes around the attribute value, and a right angle bracket before the start of the next element or text section, etc., to re-create the original markup. Grammar state machine 650 returns information about what syntax (punctuation) should be added to the regenerated XML. XML regenerator 640 may pass the type information to the state machine.

The advantages of this system include the fact that resolving queries by scanning and comparing encoded integer values is much faster than processing the XML in text. In addition, structures that index into this data to accelerate query evaluation can be represented efficiently by referring to these integer values rather than offsets into a text representation.

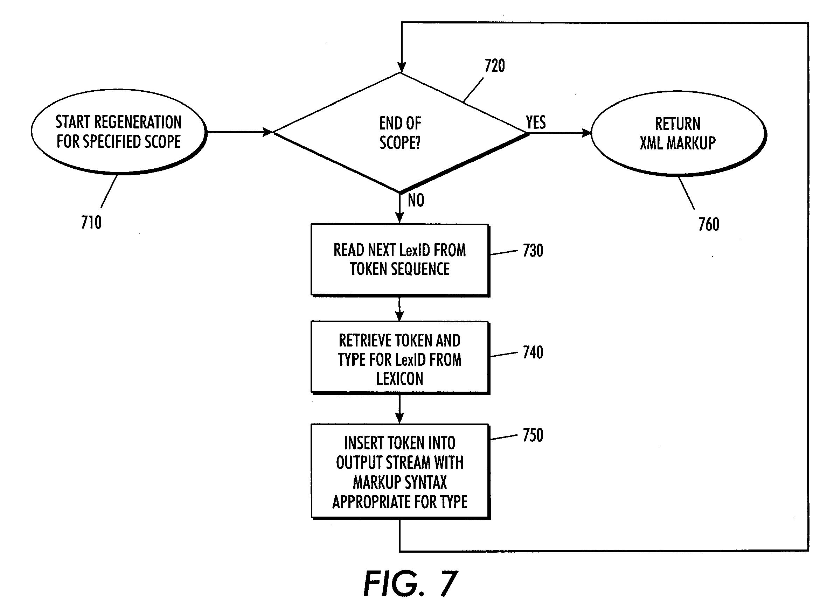

Turning now to Figure 7, the method for storing XML data in BOXR is illustrated. At 710 the system has been instructed to import and open an XML document. The import process may be initiated in several ways, for example, XQuery functions are built into BOXR that import documents. A determination is made at 720 as to whether the end of the XML document has been reached. The text markup of the XML is parsed, thus identifying the tokens and their types. The end of the XML document is reached when all markup has been processed. If the end of the document has not been reached, at 740 the Token ID is read from the XML document and a type is assigned and stored as part of the Token ID. The type, only one of which is assigned per token, may be in the form of an element, end tag, attribute name, attribute value, CDATA section start, CDATA section end, CDATA token, CDATA whitespace, comment, or XML declaration, as defined by the XML standard (http://www.w3.org/TR/2004/REC-xml-20040204/).

At 750 a determination is made as to whether the token is in the Lexicon module. If the token is included in the Lexicon module, at 760 the software retrieves Token ID for the token from the Lexicon. Token ID is appended to the token sequence at 770 and stored in the list for the current element at 780. If the token is not included in the Lexicon module, the token and type are stored in the Lexicon module and a unique Token ID is assigned at 790. The Token ID is then appended to the token sequence at 770 and stored in the list for the current element at 780. This information is returned to 720 for continued review of the XML document. If the end of the XML document has been reached, the element/Token ID lists are inverted to create Token ID/element postings at 730. While "postings" files are traditionally associated with search engines, the terminology comes from information retrieval technology rather than database technology. "Postings" are also referred to as "inverted files", because they "invert" information: In a search engine, to generate postings, a list of all of the tokens that occur in each document is inverted so that it is possible to look up all of the documents that contain a particular token. In BOXR, this approach is modified, instead of recording the tokens in each "document", BOXR records the tokens in certain XML elements. The choice of which elements to record is either done automatically or can be specified by the database designer. The data files are saved at 735.

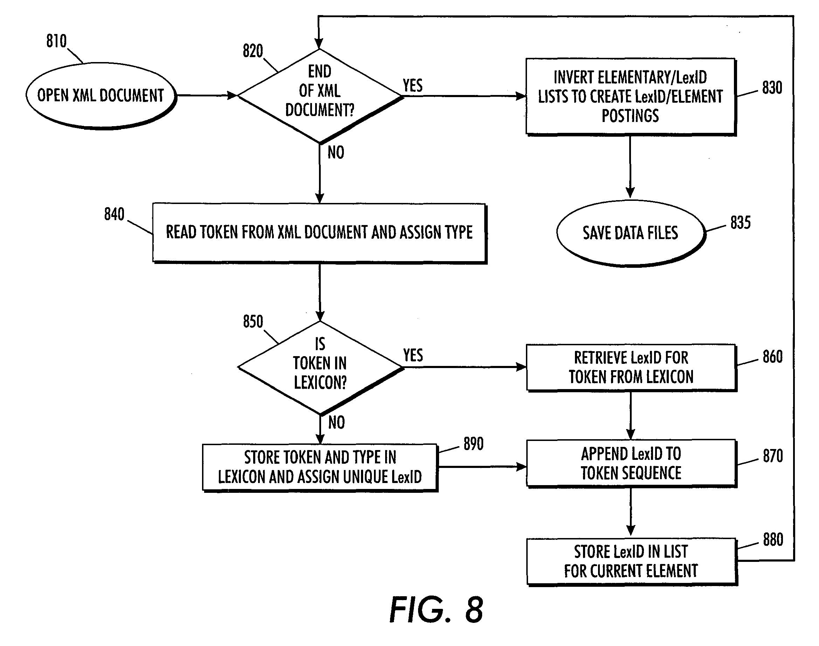

Referring to Figure 8, the method for regenerating XML is illustrated. At 810 regeneration is begun for a specified scope, defined for the purposes herein as an XML fragment defined by a start and an end tag and all properly nested XML enclosed therein, with a "fragment" being a well-formed portion of an XML document. "Well-formed" means adhering to XML syntax and containing an end tag for each start tag, while an XML "document" is a fragment starting with a special XML declaration. At 820 a determination is made as to whether the end of the scope of the XML fragment has been reached. If this is not the case, at 830 the next Token ID is read from the token sequence. The token and type for the Token ID are retrieved from the Lexicon module at 840. The token type is assigned during storage and is stored as part of the Token ID. The token is inserted into the output stream with markup syntax appropriate for the Token ID type at 850 and another check is made at 820 as to completion of scope. If the end of the specified scope has been reached, at 860 the completed XML markup is returned.

## Claims

1. A system for extension of XQuery in a binary object XML repository, full text search integration, and a storage and retrieval repository, the system comprising:
at least one XQuery interpreter module for implementing the XQuery language in the binary object XML repository;
at least one function dispatcher module for implementing an XQuery function call mechanism, wherein a function is defined by the name of said function, the number of arguments taken by said function, and the datatypes of said arguments;
at least one plug-in function library manager for implementing the client side of the binary object XML repository plug-in function application program interface; and
at least one dynamically-linked plug-in function library module for implementing the server side of the binary object XML repository plug-in function application program interface.

2. The system for extension of XQuery in a binary object XML repository according to claim 1, further comprising:
at least one search function implementation module for implementing the built-in search function and interpreting the full-text search query syntax, wherein said built-in search function is a function specified as part of the Xquery language;
at least one search function postings resolution manager module for computing the candidate elements for search query resolution; and
at least one postings module for returning all XML nodes that contain a specified token, wherein said token corresponds to a piece of XML syntax.

3. The system for extension of XQuery in a binary object XML repository according to claim 1 or claim 2, further comprising:
at least one import manager module for converting at least one file format to XML;
at least one indexer module for encoding XML document data in a binary data structure;
at least one lexicon module for storing at least one token and at least one token type and assigning at least one token identifier number, wherein said token includes data elements corresponding to XML syntax;
at least one sequence module for storing said at least one token identifier number in an original sequence; and
at least one postings module for mapping said at least one token identifier number to said token identifier's position in said original sequence.

4. The system for extension of XQuery in a binary object XML repository according to claim 3, wherein said at least one postings module inverts the information from a list of tokens in an XML data element to map at least one selected token to at least one XML data element in which it appears.

5. A system according to any of the preceding claims, further comprising:
at least one regenerator module for retrieving said at least one token for a specified scope in said sequence, wherein said specified scope includes an XML fragment defined by a start and an end tag; and
at least one XML grammar state machine module for using said token type information to compute the syntax for regenerating XML.

6. A method for extension of XQuery for a binary object XML repository, full text search integration, and storage and retrieval of information, having an XQuery interpreter module, a function dispatcher module, a plug-in function library manager, at least one plug-in function library module, a search function implementation module, a search function postings resolution manager module, a postings module, an import manager module, an indexer module, a lexicon module, and a sequence module, the method comprising:
implementing the XQuery language in the binary object XML repository;
preparing to execute a function, wherein a function is defined by the name of said function, the number of arguments taken by said function, and the datatypes of said arguments;
determining whether said function is a built-in or user-defined XQuery function, wherein said built-in function is specified as part of the XQuery language;
executing the computer code for said function if said function is a built-in or user-defined XQuery function;
determining whether said function has been declared in a plug-in library if said function is not a built-in or user-defined XQuery function;
dispatching said function to said declared library and executing the computer code for said function if said function has been declared in a plug-in library;
determining whether at least one plug-in library module has been added or changed if said function has not been declared in a plug-in library;
loading said new or changed library modules if said at least one plug-in library module has been added or changed; and
declaring an undefined function error if said at least one plug-in library module has not been added or changed.

7. The method for extension of XQuery for a binary object XML repository according to claim 6, further comprising:
initiating a full-text search when the XQuery interpreter encounters a search function command;
identifying all matching variants in a lexicon for each search term within said search function command;
collecting postings lists for each variant of each said search term;
filtering said posting lists according to search query Boolean logic;
filtering said posting lists for relations specified in said search query; and
returning element matching said search query to said XQuery interpreter.

8. The method for extension of XQuery for a binary object XML repository according to claim 7, wherein said postings lists contain sequence offsets to elements containing terms in said search query, wherein said sequence offset comprises the location in the sequence file for a particular token.

9. The method for extension of XQuery for a binary object XML repository according to any of claims 6 to 8, further comprising:
importing an XML document;
encoding XML data in a binary data structure;
storing at least one token and at least one token type and assigning at least one token identifier number, wherein said at least one token includes data elements corresponding to XML syntax;
storing said at least one token identifier number in an original sequence; and
mapping said at least one token identifier number to said token identifier's position in said original sequence.

10. A method according to claim 9, further comprising continuing the document processing process when said complete XML document has not been processed, comprising:
determining if said token is included in the lexicon module;
retrieving said token identifier from said lexicon if said token is included in said lexicon, appending said token identifier to said token sequence, and storing said token identifier in the list for the current element; and
storing said token and said token type in the lexicon if said token is not included in said lexicon, assigning a unique token identifier to said token, appending said token identifier to the token sequence, and storing said token identifier in the list for the current data element.

11. A method according to claim 9 or claim 10, further comprising:
initiating document regeneration for a specified scope, wherein said scope comprises an XML fragment defined by a start tag and an end tag; and
using said token type information to compute the syntax for regenerating XML.

12. A method according to claim 11, wherein using said token type information to compute the syntax for regenerating XML comprises:
reading the next token identifier from the token sequence;
retrieving the token and token type for a token identifier from the lexicon; and
inserting said token into the output stream with the markup syntax appropriate for type.
